Europäisches Patentamt

European Patent Office

Office européen des brevets

(11) Veröffentlichungsnummer: **0 267 454 B1**

# EUROPÄISCHE PATENTSCHRIFT

(45) Veröffentlichungstag der Patentschrift: **15.04.92**

(51) Int. Cl.⁵: **B60T 8/44**

(21) Anmeldenummer: **87115051.2**

(22) Anmeldetag: **15.10.87**

(54) **Hydraulisches Fahrzeugbremssystem.**

(30) Priorität: **14.11.86 DE 3639003**

(43) Veröffentlichungstag der Anmeldung:
**18.05.88 Patentblatt 88/20**

(45) Bekanntmachung des Hinweises auf die
Patenterteilung:
**15.04.92 Patentblatt 92/16**

(84) Benannte Vertragsstaaten:
**AT DE FR GB**

(56) Entgegenhaltungen:
**DE-A- 3 040 561**
**FR-A- 2 559 723**
**GB-A- 2 170 287**

(73) Patentinhaber: **ROBERT BOSCH GMBH**
**Postfach 30 02 20**
**W-7000 Stuttgart 30(DE)**

(72) Erfinder: **Zirps, Wilhelm, Ing. grad.**
**Immanuel-Kant-Strasse 9**
**W-7254 Hemmingen(DE)**

## Beschreibung

### Stand der Technik

Die Erfindung geht aus von einem hydraulischen Fahrzeugbremssystem gemäß Oberbegriff des Hauptanspruchs. Derartige hydraulische Fahrzeugbremssysteme mit zwei getrennten Bremskreisen, einem Bremskraftverstärker, einem Antiblockiersystem und diese versorgenden hydraulischen Energieversorgungssysteme sind beispielsweise aus der DE-OS 30 40 562 bekannt. Dabei ist dort in einem Gehäuse ein Bremskraftverstärker vorgesehen, dem eine Tandemzylinderanordnung nachgeschaltet ist. In dieser Tandemzylinderanordnung befindet sich ein Rückstellringkolben, der beim Einschalten des Antiblockiersystems den Zylinderkolben über Elemente des Bremskraftverstärkers gegen das Bremspedal zurückschiebt. Der von dem Rückstellringkolben, dem Zylinderkolben und dem Gehäuse gebildete Kolbenraum steht ausschließlich mit dem Vorratsbehälter in Verbindung, so daß die Rückwirkung über den Rückstellringkolben auf das Bremspedal in keinerweise gesteuert ist. Diese Rückwirkung kann je nach den Umständen bei Einschaltung des Regelbetriebes, d.h. der Antiblokkierregelung, sehr hoch und für den Benutzer unangenehm sein. Ferner ist in dieser Einrichtung keine Möglichkeit der Nachspeisung von Bremsflüssigkeit in die Bremskammern vorgesehen.

Insbesondere zur Dämpfung der Pedalrückführung sind Drosselvorrichtungen bekannt, welche jedoch sowohl bei normalem Bremsen wie auch im Regelbetrieb einseitig durchströmt werden. Diese Drosseln haben den Nachteil, daß sie durch stetige Ablagerung von Fremdteilen verstopft werden. Dieser Fehler wird vom Fahrer nicht erkannt. Andererseits hängt von der Zuverlässigkeit der Drosseleinrichtung die Sicherheit der Bremse ab. Ist die Drossel einmal verstopft, so können die Kolben beim Bremsen mit Antiblockiersystem nicht in die vorgesehene Sicherheitsposition gebracht werden. Fällt dann die Energieversorgung aus, ist das Fahrzeug nur mit reduzierter Restbremswirkung oder gar nicht mehr zu bremsen.

### Vorteile der Erfindung

Das erfindungsgemäße hydraulische Fahrzeugbremssystem mit den Merkmalen des Hauptanspruchs hat demgegenüber den Vorteil, daß durch den Anschluß der von der Anschlagbuchse, dem Hauptzylinderkolben und dem Gehäuse gebildeten Kolbenkammer an das Servosystem des Bremskraftverstärkers eine Steuerung der Rückführung der Anschlagbuchse und damit auch des Hauptzylinderkolbens stattfindet, so daß die Rückführung sich nicht unangenehm auf den Benutzer des Bremspedals auswirkt.

Beim normalen Betrieb des Bremssystems bleibt allerdings das erfindungsgemäß vorgesehene Ventil, das die Kolben kammer mit der Servoleitung verbinden kann, auf die Verbindung zwischen Kolbenkammer und Versorgungsbehälter umgeschaltet. Auf diese Weise fließt beim normalen Betrieb Bremsflüssigkeit aus der Kolbenkammer ungehindert in den Versorgungsbehälter ab. Auch bei der Rückstellung des Hauptzylinderkolbens im normalen Betrieb wird das Ventil nicht auf die Servoleitung umgeschaltet, so daß sich die Kolbenkammer ungehindert durch Zufluß von hydraulischer Flüssigkeit aus dem Vorratsbehälter auffüllen kann.

Erfindungsgemäß sind weiterhin am Hauptzylinderkolben und, falls eine Tandemzylinderanordnung vorgesehen ist, auch an dem nachgeschalteten Kolben ein Ringkanal bzw. ein Ringraum vorgesehen. Während der Ringraum des nachgeschalteten Kolbens der Einfachheit halber direkt über das obengenannte Ventil entweder mit der Servoleitung oder Leitung zum Vorratsbehälter verbunden werden kann, führt vom Ringkanal des Hauptzylinderkolbens eine Axialbohrung zur Kolbenkammer und steht auf diesem Wege über das Ventil entweder mit der Servoleitung oder Leitung zum Versorgungsbehälter in Verbindung.

Neben dem Ringkanal bzw. dem Ringraum ist jeweils eine den entsprechenden Kolben umgebende Dichtung, vorzugsweise eine Lippendichtung, vorgesehen, die allerdings einen Durchlaß von hydraulischer Flüssigkeit vom Ringkanal bzw. Ringraum zur jeweiligen Bremskammer gewährleistet. Dieser Durchlaß ist allerdings in eine Richtung, nämlich vom Ringraum bzw. Ringkanal zur jeweiligen Bremskammer gestattet, in entgegengesetzter Richtung dichtet die Dichtung ab.

Ringkammer und Ringkanal haben vor allem beim Regelbetrieb Bedeutung. Nähert sich eines der gebremsten Räder der Blockiergrenze, so wird durch entsprechende Magnetventile die zugehörige Radbremse vom Hauptbremszylinder getrennt. Der Druck in dieser abgetrennten Radbremse kann dann gehalten oder durch Ablassen von Bremsflüssigkeit in den Vorratsbehälter abgesenkt werden. Gleichzeitig wird aber auch das obengenannte Ventil von der Verbindung zur Leitung zum Vorratsbehälter in die Verbindung zur Servoleitung umgeschaltet. Damit herrscht in sämtlichen angeschlossenen Räumen, insbesondere in der Kolbenkammer, im Ringkanal und im Ringraum ein Servodruck, der etwa dem Druck in den Bremskammern entspricht. Der Servodruck kann allerdings noch durch erhöhtes Drükken auf das Fußpedal angehoben werden, was zur Folge hat, daß aus dem Ringraum und dem Ringkanal unmittelbar Bremsflüssigkeit über die Dichtung in die Bremskammern übertritt, bis sich die Drücke ausgeglichen haben.

Auf diese Weise wird auch Bremsflüssigkeit nachgespeist, wenn durch den Regelbetrieb der Druck in den Bremskammern sinkt.

Weiterhin ist erfindungsgemäß vorgesehen, daß die Axialbohrung in dem Hauptzylinderkolben bzw. ein vom Ringraum abzweigendes Leitungssystem in einem gegebenenfalls vorgesehenen nachgeschalteten Tandemkolben zur jeweiligen Bremskammer hin von einem Nachsaugventil verschließbar ist. Dieses Nachsaugventil dient vor allem dem Abschliessen der Bremskammern bei einem Bremsdruck, so daß keine Flüssigkeit aus den Bremskammern über die entsprechenden Leitungen bzw. Räume vor allem bei Normalbetrieb in den Vorratsbehälter abfließen kann.

Das Nachsaugventil besteht im wesentlichen aus einem auf einer Führungsstange sitzenden kegelförmigen Aufsatz, der in der Axialbohrung bzw. in dem Leitungssystem seinen passenden Ventilsitz hat. Dieser kegelförmige Aufsatz ist in einer Stirnbohrung des entsprechenden Kolbens so über eine Feder abgestützt. daß die entsprechende Axialbohrung bzw. das Leitungssystem bei Nichtbetätigen der Bremse offen ist. Erst beim Betätigen der Bremse nimmt es seinen Ventilsitz ein. Herrscht allerdings in der Axialbohrung bzw. dem Leitungssystem ein gegenüber dem Druck in den Bremskammern erhöhter Servodruck, so kann auch über dieses Nachsaugventil Bremsflüssigkeit in die Bremskammern abfließen. Im übrigen öffnet es sich vor allem beim Zurückführen der Kolben in ihre Ausgangsstellung und saugt dann selbsttätig Bremsflüssigkeit aus dem Leitungssystem bzw. der Axialbohrung und den nachgeschalteten Räumen bzw. Leitungen an.

Um ein Öffnen des Nachsaugventils in der Ausgangslage zu gewährleisten, ist der Führungsstange ein Kopf angeformt, der in einer definierten Endlage an einem Hut oder einem entsprechenden Ansatz anschlägt und ein weiteres Folgen des Nachsaugventils der Kolbenbewegung verhindert.

Bevorzugt soll der Hauptzylinderkolben einen Bund als Anschlag für die Anschlagbuchse aufweisen. Unter dem Druck ihrer Feder, die sich einerseits an einem gehäusefesten Anschlag und andererseits an einem Steg um die Anschlagbuchse abstützt, folgt die Anschlagbuchse der Bewegung des Hauptzylinderkolbens, bis sie mit dem Steg an einer erfindungsgemäßen vorgesehenen Gehäuseschulter anliegt. Zu diesem Zeitpunkt schließt sie mit einer Steuerkante teilweise eine Bohrung, welche wiederum eine Verbindung im normalen Betrieb des Bremssystems zum Vorratsbehälter und im Regelbetrieb zur Servoleitung bildet.

Im normalen Bremsbetrieb des vorliegenden Fahrzeugbremssystems wird durch Betätigung der Fußbremse über eine Stange der Bremskraftverstärker in Gang gesetzt. Hauptzylinderkolben und gegebenenfalls nachgeschalteter Tandemkolben werden von einem entsprechenden Servokolben des Bremskraftverstärkers mitgenommen und die Nachsaugventile geschlossen. Gleichzeitig gelangt Flüssigkeit aus den Bremskammern über die Bremsleitungen zu den Radbremsen. Der Druck in den Radbremsen ist dem Druck in der Bremskraftverstärkerkammer äquivalent, so daß eine feste Zuordnung zwischen Bremswirkung und der aufgebrachten Fußkraft gegeben ist. Beim Aufheben der Bremspedalwirkung werden Hauptzylinderkolben und gegebenenfalls nachgeschalteter Tandemkolben unter Federkraft in ihre Ausgangslage zurückbewegt, wobei sich die Nachsaugventile öffnen und Bremsflüssigkeit in die Bremskammern ansaugen.

Beim Verschieben des Hauptzylinderkolbens bewegt sich zunächst auch die Anschlagbuchse unter dem Druck ihrer Feder mit dem Hauptzylinderkolben, wobei sie dessen Bund anliegt. Nach kurzer Strecke verhindert jedoch ein die Anschlagbuchse umfangender Sprengring ein weiteres Entspannen der Feder, so daß die Anschlagbuchse zum Stillstand kommt, auch wenn der Hauptzylinderkolben sich weiterbewegt. In dieser Stellung überdeckt die Steuerkante teilweise die Bohrung, welche eine Verbindung des sich bei Bewegung des Hauptzylinderkolbens vergrößernden Raumes zwischen Bund und Steuerkante zum Vorratsbehälter herstellt. Durch diese Bohrung kann ebenfalls Bremsflüssigkeit in diesen Raum eingesaugt werden, die sich auch in den Spielraum zwischen Anschlagbuchse und Hauptzylinderkolben verteilt.

Nähert sich nun eines der gebremsten Räder der Blockiergrenze, so kommt es zum Regelbetrieb, d.h. die zugehörige Radbremse wird vom Hauptbremszylinder getrennt und gleichzeitig das Ventil von der Leitung zum Vorratsbehälter auf die Servoleitung umgeschaltet. Damit steht neben den obengenannten Ringkanal, Ringraum und Kolbenkammer auch der zwischen Bund und Kolbenkammer zwischenzeitlich gebildete Raum unter Servodruck. Dies hat nun die Auswirkung, daß bei erhöhter Bremskraft, wie oben näher beschrieben, Bremsflüssigkeit aus der Ringkammer bzw. dem Ringkanal über die Dichtung in die Bremskammer austreten kann, bis die Drücke ausgeglichen sind. Ein weiter steigender Druck im Kolbenraum wirkt sich jedoch auf die Kolbeninnenfläche des Hauptzylinderkolbens aus, wodurch dieser entgegen dem Bremsdruck geführt wird. Dabei muß allerdings der Hauptzylinderkolben mit seinem Bund die inzwischen zwischen Bund und Steuerkante der Anschlagbuchse durch die Bohrung eingetretene Flüssigkeit wieder durch die teilweise von der Anschlagbuchse überdeckte Bohrung ausschieben. Die Zeit zum Ausschieben dieser Flüssigkeit bestimmt die Rückstellgeschwindigkeit des Pedals und ist durch Dimensionierung des Restquerschnitts der Bohrung beeinflußbar. Damit wird eine gedämpfte Pedalrückwirkung erhalten, die sich auf die Benutzung nicht unangenehm auswirkt. Sobald dann der Bund der Anschlagbuchse wieder anliegt, entfällt die gedämpfte Pedalrückwirkung, die aber dann auch nicht mehr notwendig ist, da sich der Druck in den Bremskammern genügend entspannt hat. Anschlagbuchse, Hauptzylinderkolben und gegebenenfalls Tandemkolben werden dann unter dem Druck ihrer entsprechenden Federn in die Ausgangslage zurückgeführt.

Dieses erfindungsgemäße Fahrzeugbremssystem hat den Vorteil, daß eine Drosselung der Rückführung der entsprechenden Kolben nur beim Bremsen im Regelbetrieb erfolgt und der Durchgangsquerschnitt danach sofort voll geöffnet wird, so daß eine Anlagerung von Fremdteilen auszuschliessen ist.

Zeichnung

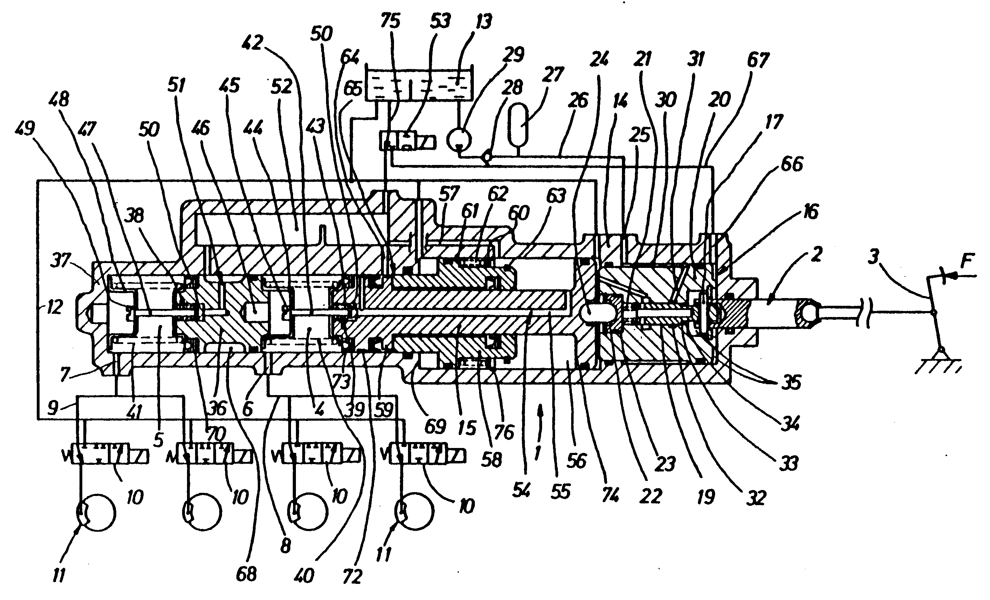

Die Erfindung wird nachfolgend anhand der Zeichnung erläutert. Diese zeigt in ihrer einzigen Figur eine teilweise als Blockschaltbild und teilweise im Querschnitt dargestellte erfindungsgemäße Bremsanlage.

Ein querschnittlich dargestellter Hauptbremszylinder 1 ist über eine Stange 2 mit einem Bremspedal 3 verbunden, auf das in Richtung F eine Fußkraft zum Bremsen wirken kann.

Im Hauptbremszylinder 1 sind zwei tandemartig hintereinandergeschaltete Bremskammern 4 und 5 vorgesehen, welche über jeweils einen Auslaß 6 und 7 zugehörige Bremsleitungen 8 und 9 sowie Magnetventile 10 mit Radbremsen 11 in Verbindung stehen. Von den Magnetventilen 10 führt eine Rückflußleitung 12 zurück zu einem Vorratsbehälter 13 für die Bremsflüssigkeit.

Die Elemente des Hauptbremszylinders 1 sind in einem Gehäuse 14 angeordnet, wobei ein Hauptzylinder 15 über einen Bremskraftverstärker 16 und die Stange 2 mit dem Bremspedal 3 in Verbindung steht. Die Stange 2 ist dabei über einen Stift 17 mit einem Steuerschieber 18 verbunden, der in einer Axialbohrung 19 eines Servokolbens 20 gleitbar lagert. Dabei stützt sich der Steuerschieber 18 jenseits der Stange 2 über eine Feder 21 gegen ein Widerlager 22 ab, welches ebenfalls axial gleitend in einer erweiterten Axialbohrung 23 im Servokolben 20 vorgesehen ist. Zwischen diesem Widerlager 22 und dem Hauptzylinderkolben 15 wird ein Druckbolzen 24 gehalten.

Der Bremskraftverstärker 16 steht über einem Einlaß 25 im Gehäuse 14 sowie eine Leitung 26 einmal mit einem Speicher 27 und ein Rückschlagventil 28 sowie eine Pumpe 29 mit dem Vorratsbehälter 13 in Verbindung. Über die Leitung 26 gelangt Druckflüssigkeit durch den Einlaß 25 in einen zwischen Gehäuse 14 und Servokolben 20 vorgesehenen Ringkanal 30. Dieser Ringkanal 30 steht über einer Radialbohrung 31 mit einer zwischen Servokolben 20 und Steuerschieber 18 angeordneten Ringkammer 32 in Verbindung. In der Figur gezeigten Ausführungsform ist diese Ringkammer 32 durch die Lage des Steuerschiebers 18 gesperrt. Dabei ist gleichzeitig der Steuerschieber 18 durch die Feder 21 in seiner Ruhestellung festgelegt. Da der Servokolben 20 als Stufenkolben ausgebildet ist, bewirkt der Druck in der Ringkammer 32, daß der Servokolben ebenfalls in seiner Ruhestellung rechts am Gehäuse 14 anliegt.

Wird der Steuerschieber 18 unter der Fußkraft F über die Stange 2 gegen den Druck der Feder 21 nach links verschoben so bleibt zunächst der Servokolben 20 durch die Wirkung des in der Leitung 26 bzw. dem Ringkanal 30 herrschenden Druckes und seiner Reibung in Ruhelage. Deshalb wird der Steuerschieber 18 relativ zum Servokolben 20 nach links verschoben, so daß eine Steuerkante 33 des Steuerschiebers 18 den Rand der Ringkammer 32 überfährt. Jetzt kann Druckflüssigkeit aus dem unter Druck gesetzten Speicher 27 über eine der Steuerkante 33 folgenden Aussparung 34 am Steuerschieber 18 in eine Kammer 35 eintreten und den Servokolben 20 ebenfalls nach links schieben. Dies geschieht so lange, wie der Steuerschieber 18 dem Servokolben 20 vorauseilt und die Steuerkante 33 die Verbindung zwischen Ringkammer 32 und Kammer 35 geöffnet hält.

Jenseits des Druckbolzens 24 bildet der Hauptzylinderkolben 15 zusammen mit einem weiteren Kolben 36 die Bremskammer 4 und dieser zusammen mit einem Gehäuseboden 37 die Bremskammer 5. Hierbei stützt sich der Hauptzylinderkolben 15 in der Bremskammer 4 gegenüber dem Kolben 36 über eine Feder 40 und der Kolben 36 gegenüber dem Gehäuseboden 37 über eine Feder 41 ab. Weiterhin ist der Hauptzylinderkolben 15 mit dem Kolben 36 über eine Führungsstange 42 verbunden, welche einerseits in eine Stirnbohrung 43 im Hauptzylinderkolben 15 eingreift und andererseits von innen her einem dem Kolben 36 aufgesetzten Hut 44 mit einem Kopf 45 anliegt. Unter dem Druck der Feder 40 sind Hauptzylinderkolben 15 und Kolben 36 in begrenztem Umfang zueinander axial verschiebbar, wobei der Kopf 45 in ein Sackloch 46 im Kolben 36 eintauchen kann.

Eine ähnliche Anordnung ist auch für eine Führungsstange 47 zwischen Kolben 36 und dem Gehäuseboden 37 vorgesehen. Auch diese Führungsstange 47 greift einerseits in eine jetzt nicht mehr bezeichnete Stirnbohrung in den Kolben 36 ein und wird andererseits durch eine von innen an einen am Gehäuseboden 37 festliegenden Ansatz 48 anschlagenden Kopf 49 gehalten.

In der Stirnbohrung 43 sowohl des Hauptzylinderkolbens 15 wie auch des Kolbens 36 bilden die Führungsstangen 42 bzw. 47 ein Nachsaugventil 38 bzw. 39. Hierzu weisen beide Führungsstangen 42 bzw. 47 einen federgelagerten kegelförmigen Aufsatz 50 auf. Dabei kann der kegelförmige Aufsatz 50 des Kolbens 36 ein Leitungssystem 51 verschließen, welches zu einer Sammelkammer 52 und von dort über ein Magnetventil 53 zum Vorratsbehälter 13 führt.

Ebenso kann der kegelförmige Aufsatz 50 des Nachsaugventils 39 ein Leitungssystem 54 verschließen, welches über eine Axialbohrung 55 im Hauptzylinderkolben 15, eine Kolbenkammer 56 sowie eine Zuleitung 57 zur Sammelkammer 52 führt. Über diese Sammelkammer 52 steht dann das Leitungssystem 54 und die Zwischenschaltung des Magnetventils 53 ebenfalls mit dem Vorratsbehälter 13 in Verbindung.

In der Kolbenkammer 56 umgibt den Hauptzylinderkolben 15 eine Anschlagbuchse 58, welche mit der pedalfernen Stirnliegt. Zur nachgiebigen Begrenzung eines Verschiebewegs der Anschlagbuchse 58 ist ein ortsfester Ringanschlag 76 und daneben eine bewegliche Scheibe 60 vorgesehen, zwischen der und einer der Anschlagbuchse 58 angeformten Manschette 61 eine Feder 62 eingelagert ist.

Nachfolgend wird die Wirkungsweise der Bremsanlage beschrieben:
Wie oben erwähnt öffnet sich durch das Verschieben des Steuerschiebers 18 ein Durchgang von der Ringkammer 32 zur Kammer 35 und der Servokolben 20 verschiebt sich unter dem Druck der Flüssigkeit aus dem Druckspeicher 27 über Leitung 26, Einlaß 25, Ringkammer 30 sowie Radialbohrung 31 nach links. Dabei nimmt der Servokolben 20 den Druckbolzen 24 mit, der wiederum den Hauptzylinderkolben 15 beaufschlagt. Dabei wird das Nachsaugventil 39 geschlossen, indem der kegelförmige Aufsatz 50 seinen Ventilsitz in der Axialbohrung 55 einnimmt. Unter dem Druck des Hauptzylinderkolbens 15 gelangt Bremsflüssigkeit aus der Bremskammer 4 durch den Auslaß 6 und die Bremsleitung 8 zu den entsprechenden Radbremsen 11. Gleichzeitig wird auch der Kolben 36 nach links verschoben und dessen Nachsaugventil 38 verschlossen. Unter dem Druck des Kolbens 36 gelangt nun Bremsflüssigkeit aus der Bremskammer 5 über den Auslaß 7 und der Bremsleitung 9 zu den daran angeschlossenen Radbremsen 11. Da der Druck in den Radbremsen dem Druck in der Kammer 35 äquivalent ist und dieser auf die Stange 2 gegen die Fußkraft F wirkt, ist auch eine feste Zuordnung zwischen Bremswirkung und Fußkraft F gegeben.

Beim Verschieben des Hauptzylinderkolbens 15 bewegt sich zunächst auch die Anschlagbuchse 58 unter dem Druck der Feder 62 nach links, bis ein an der Anschlagbuchse 58 vorgesehener Sprengring 63 an der Scheibe 60 anschlägt. Jetzt entspannt sich die Feder 62 nicht mehr weiter und die Anschlagbuchse 58 kommt zum Stillstand, auch wenn der Hauptzylinderkolben 15 noch weiter nach links verschoben wird. In dieser Stellung ist eine Bohrung 64 zur Sammelkammer 52 von einer Steuerkante 65 der Anschlagbuchse 58 teilweise abgedeckt.

Nähert sich nun eines der gebremsten Räder der Blockiergrenze, was durch einen bekannten, nicht näher gezeigten Radsensor festgestellt werden kann, so wird die zugehörige Radbremse 11 durch das entsprechende Magnetventil 10 vom Hauptbremszylinder 1 getrennt. Der Druck in dieser abgetrennten Radbremse 11 kann nun gehalten oder durch Ablassen von Bremsflüssigkeit in den Vorratsbehälter 13 abgesenkt werden.

Gleichzeitig wird das Magnetventil 53 umgeschaltet und die Kammer 35 über eine Anschlußbohrung 66 sowie eine Leitung 67 mit der Sammelkammer 52 und über diese Sammelkammer 52 sowie die Zuleitung 57 mit der Kolbenkammer 56 und über das Leitungssystem 51 mit einem Ringraum 68 verbunden. In der Kolbenkammer 56 und dem Ringraum 68 herrscht jetzt der über den Steuerschieber 18 geregelte Servodruck, der etwa dem Druck in den Bremskammern 4 und 5 entspricht.

Der Druckanstieg in der Kolbenkammer 56 und dem Ringraum 68 hat nun folgende Auswirkungen:
a) Bei geringer Abbremsung, bei geringem Bremsdruck, während dem die Manschette 61 der Anschlagbuchse 58 nicht zur Anlage an eine Gehäuseschulter 69 kommt, stützt sich die Anschlagbuchse 21 am Bund 59 des Hauptzylinderkolbens 15 ab. Es entstehen keine nach außen wirkenden axialen Kräfte.
Bei stärkerem Durchdrücken des Pedals unter der Fußkraft F schlägt die Anschlagbuchse 58 an der Gehäuseschulter 69 an. Wird nun die Fußkraft F noch weiter erhöht, so führt dies auch zu einer weiteren Druckanhebung in der Kammer 35 und den damit verbundenen räumen. Dies hat zur Folge, daß über die Leitung 67, die Sammelkammer 52, das Leitungssystem 51 und die Zuleitung 57 auch der Druck in der Kolbenkammer 56 und dem Ringraum 68 erhöht wird. Hierdurch tritt aus dem Ringraum 68 unmittelbar Bremsflüssigkeit über eine Lippendichtung 70 in die Bremskammer 5 und von der Kolbenkammer 56 über die Axialbohrung 55, eine Radialbohrung 71, einen Ringkanal 72 und eine Lippendichtung 73 in die Bremskammer 4 ein, bis sich die Drücke ausgeglichen haben. Auf die selbe Weise wird auch Bremsflüssigkeit nachgespeist, wenn durch den Regelbetrieb der Druck in den Bremskammern 4 und 5 sinkt.
Bei abnehmender Fußkraft F wird das Bremspedal 3 durch die unter Servodruck stehende Stange 2 zunächst nach rechts geschoben. Dieser Bewegung folgt der Servokolben 20, der Hauptzylinderkolben 15 und der Kolben 36, jedoch nur in einem bestimmten Hubbereich, weil danach die Nachsaugventile 38 und 39 öffnen und die Bremskammern 4 und 5 über die entsprechenden Leitungssysteme 51 bzw. 54 mit der Kammer 35 verbunden werden. Mit abnehmender Fußkraft F sinkt der Servodruck in der kammer 35 und den Bremskammern 4 und 5 weiter ab, ohne daß sich die Hauptzylinderkolben 15 bzw. 36 bewegen.

b) War die Abbremsung vor Beginn der Regelung größer, so wird durch die Einleitung des Servodrucks aus der Kammer 35 über die Sammelkammer 52, die Zuleitung 57 und die Kolbenkammer 56 die Anschlagbuchse 58 bis zur Gehäuseschulter 69 nach links geschoben. Dabei wird die Bohrung 64 durch die Steuerkante 65 an der Anschlagbuchse 58 bis auf einen kleinen Restquerschnitt geschlossen. Der nun weiter steigende Druck in der Kolbenkammer 56 wirkt auf die pedalseitige, größere Kolbeninnenfläche 74 des Hauptzylinderkolbens 15, wodurch der Servokolben 20 und über die Stange 2 auch das Bremspedal 3 gegen die Fußkraft F nach rechts in die Sicherheits-Position zurückgeschoben wird. Die zwischen dem Bund 59 und der Steuerkante 65 der Anschlagbuchse 58 eingeschlossene Flüssigkeit muß dabei über dem kleinen Restquerschnitt der Bohrung 64 in die Sammelkammer 52 ausgeschoben werden. Diese Zeit zum Ausschieben der Flüssigkeit bestimmt die Rückstellgeschwindigkeit des Bremspedals 3 und ist durch die Dimensionierung des Restquerschnitts der Bohrung 64 beeinflußbar.

Nach Aufliegen des Hauptzylinderkolbens 15 mit dem Bund 59 an der Anschlagbuchse 58 folgt der weitere Funktionsablauf wie in a) beschrieben.

**Patentansprüche**

1. Hydraulisches Fahrzeugbremssystem mit einem in einem Gehäuse (14) angeordneten Bremskraftverstärker (16), welcher unter Verwendung von Bremsflüssigkeit aus einem Vorratsbehälter (13) wenigstens über eine Pumpe (29) und einen Speicher (27) mit Energie versorgbar ist und eine Kammer (35) mit einem Servokolben (20) und wenigstens ein Magnetventil (53) zur Bremsdruckerzeugung in Bremskammern (4, 5) eines Hauptbremszylinders (1) aufweist, wobei an die Bremskammern (4, 5) über Bremsleitungen (8, 9) und eingeschaltete Magnetventile (10) Radbremszylinder von Radbremsen (11) anschließen, und mit einer den Hauptzylinderkolben (15) umgebenden Anschlagbuchse (58), welche eine Manschette (61) aufweist, zwischen der und einem gehäusefesten Ringanschlag (60, 76) eine Feder (62) angeordnet ist, wobei die Anschlagbuchse (58) und eine Kolbeninnenfläche (74), die zwischen der Anschlagbuchse (58) und der Kammer (35) liegt, und das Gehäuse (14) eine Kolbenkammer (56) einschließen, dadurch gekennzeichnet, daß die Kolbenkammer (56) bei Regelbetrieb ebenfalls mit der Pumpe (29) sowie dem Speicher (27) über den Bremskraftverstärker (16) und entsprechende Leitungen (57, 67) in Verbindung steht, während sie bei normalem Bremsbetrieb über eine Leitung (75), die dem umschaltbaren Magnetventil (53) nachgeordnet ist, über das umschaltbare Magnetventil (53) an den Vorratsbehälter (13) angeschlossen ist.

2. Fahrzeugbremssystem nach Anspruch 1, dadurch gekennzeichnet, daß bei normalem Bremsbetrieb ein Ringraum (68) des Kolbens (36) direkt und ein Ringkanal (72) des Hauptzylinderkolbens (15) über eine Axialbohrung (55) sowie die Kolbenkammer (56) nach dem Ventil (53) mit der Leitung (75) zu dem Versorgungsbehälter (13), im Regelbetrieb aber mit der Servoleitung (67) nach dem Ventil (53) in Verbindung stehen.

3. Fahrzeugbremssystem nach Anspruch 2, dadurch gekennzeichnet, daß der Ringraum (68) und der Ringkanal (72) über eine hydraulische Flüssigkeit einseitig vom Ringraum (68) bzw. Ringkanal (72) durchlassende Dichtung (70 bzw. 73) mit dem Bremskammern (4, 5) verbunden ist.

4. Fahrzeugbremssystem nach Anspruch 2 oder 3, dadurch gekennzeichnet, daß die Axialbohrung (55) bzw. ein vom Ringraum (68) abzweigendes Leitungssystem (51) zur jeweiligen Bremskammer (4 bzw. 5) hin von einem Nachsaugventil (38) verschließbar sind.

5. Fahrzeugbremssystem nach Anspruch 4, dadurch gekennzeichnet, daß jedes Nachsaugventil (38) mit einem kegelförmigen Aufsatz (50) an einer Führungsstange (47) in die Axialbohrung (55) bzw. das Leitungssystem (51) eingreift, wobei der Aufsatz (50) in einer Stirnbohrung (43) des Kolbens (36) bzw. Hauptzylinderkolbens (15) sich federgelagert abstützt und ein jenseits des Aufsatzes (50) der Führungsstange (47) angeformter Kopf (45 bzw. 49) zusammen mit einem Hut (44) bzw. Ansatz (48) einen Anschlag zum Öffnen des Nachsaugventils (38) bildet.

6. Fahrzeugbremssystem nach wenigstens einem der Ansprüche 1 bis 5, dadurch gekennzeichnet, daß der Hauptzylinderkolben (15) einen Bund (59) als Anschlag für die Anschlagbuchse (58) aufweist.

7. Fahrzeugbremssystem nach Anspruch 6, dadurch gekennzeichnet, daß eine Gehäuseschulter (69) als weiterer Anschlag für die Anschlagbuchse (58) bzw. deren Manschette (61) vorgesehen ist.

8. Fahrzeugbremssystem nach Anspruch 6 oder 7, dadurch gekennzeichnet, daß zwischen der sich an der Manschette (61) abstützenden Feder (62) und dem Ringanschlag (76) eine Scheibe (60) befindet, auf welche bei Bewegung der Anschlagbuchse (58) ein Sprengring (63) auftrifft.

9. Fahrzeugbremssystem nach Anspruch 7 oder 8, dadurch gekennzeichnet, daß beim Anschlagen der Manschette (61) an der Gehäuseschulter (69) die Anschlagbuchse (58) mit einer Steuerkante (65) teilweise eine Bohrung (64) verschließt, welche eine Verbindung in normalem Betrieb zum Vorratsbehälter (13) und im Regelbetrieb zur Servoleitung (67) bildet.

10. Fahrzeugbremssystem nach Anspruch 9, dadurch gekennzeichnet, daß sowohl der Ringraum (68) wie auch die Bohrung (64) bzw. eine Zuleitung (57) aus dem Kolbenraum (56) in eine Sammelkammer (52) einmünden, die dem Ventil (53) vorgeschaltet ist.

**Claims**

1. Hydraulic vehicle brake system with, located in a housing (14), a brake booster (16) which can be supplied with energy by using brake fluid from a storage container (13) at least via a pump (29) and a reservoir (27) and has a chamber (35) with a servopiston (20) and at least one solenoid valve (53) for generating brake pressure in brake chambers (4, 5) of a main brake cylinder (1), wheel brake cylinders of wheel brakes (11) being connected to the brake chambers (4, 5) via brake conduits (8, 9) and solenoid valves (10) in the switched-on position, and with, surrounding the main cylinder piston (15), a stop sleeve (58) which has a shoulder (61) between which and an annular stop (60, 76) fixed to the housing, there is a spring (62), the stop sleeve (58) and a piston inner surface (74), which is located between the stop sleeve (58) and the chamber (35), and the housing (14) enclosing a piston chamber (56), characterised in that during feed-back control operation, the piston chamber (56) is also connected, via the brake booster (16) and corresponding conduits (57, 67), to the pump (29) and the reservoir (27) whereas, in normal braking operation, it is connected via the switchable solenoid valve (53) to the storage container (13) via a conduit (75) which is arranged downstream of the switchable solenoid valve (53).

2. Vehicle brake system according to Claim 1, characterised in that in normal brake operation, an annular space (68) of the piston (36) is connected directly and an annular duct (72) of the main cylinder piston (15) is connected via an axial hole (55) and the piston chamber (56) after the valve (53) to the conduit (75) to the supply container (13) but, in feed-back control operation, they are connected to the servoconduit (67) after the valve (53).

3. Vehicle brake system according to Claim 2, characterised in that the annular space (68) and the annular duct (72) are connected to the brake chambers (4, 5) via a seal (70 or 73) which can pass hydraulic fluid in one direction from the annular space (68) or the annular duct (72).

4. Vehicle brake system according to Claim 2 or 3, characterised in that the axial hole (55) or a conduit system (51) branching off from the annular space (68) can be closed off from the respective brake chamber (4 or 5) by a replenishing valve (38) (sic).

5. Vehicle brake system according to Claim 4, characterised in that each replenishing valve (38) (sic) engages by means of a conical end-piece (50) on a guide rod (47) in the axial hole (55) or the conduit system (51), the end-piece (50) having spring support in an end hole (43) of the piston (36) or the main cylinder piston (15) and a head (45 or 49) formed beyond the end-piece (50) of the guide rod (47), forming together with a cap (44) or projection (48) a stop for opening the replenishing valve (38).

6. Vehicle brake system according to at least one of the Claims 1 to 5, characterised in that the main cylinder piston (15) has a collar (59) as a stop for the stop sleeve (58).

7. Vehicle brake system according to Claim 6, characterised in that a housing step (69) is provided as a further stop for the stop sleeve (58) or its shoulder (61).

8. Vehicle brake system according to Claim 6 or 7, characterised in that between the annular stop (76) and the spring (62) supported on the shoulder (61), there is a washer (60) which is met by a spring ring (63) on movement of the stop sleeve (58).

9. Vehicle brake system according to Claim 7 or 8, characterised in that on contact between the shoulder (61) and the housing step (69), a metering edge (65) of the stop sleeve (58) partially closes a hole (64) which forms a connection to the storage container (13) in normal operation and to the servoconduit (67) in feedback control operation.

10. Vehicle brake system according to Claim 9, characterised in that the annular space (68), the hole (64) and a supply conduit (57) from the piston space (56) open into a collecting chamber (52) which is upstream of the valve (53).

**Revendications**

1. Système hydraulique pour le freinage d'un véhicule comportant un amplificateur de force de frein (16) logé dans un boîtier (14) et qui, en utilisant le liquide de frein d'un réservoir d'alimentation (13) peut être alimenté en énergie au moins par une pompe (29) et un accumulateur (27) et une chambre (35) avec un piston d'asservissement (20) et au moins une électrovanne (53) pour générer la pression de frein dans les chambres de frein (4, 5) d'un maître cylindre (1) principal, les chambres de frein (4, 5) étant reliées par des conduites de frein (8, 9) et une électrovanne (10), mise en oeuvre au cylindre des freins de roue (11), et un manchon de butée (58) entourant le piston (15) du maître cylindre, manchon qui comporte un bord (61), un ressort (62) étant placé entre ce bord et une butée annulaire (60, 76) solidaire du boîtier, le manchon de butée (58), et une surface intérieure (74) du piston qui se situe entre le manchon de butée (58) et la chambre (35), ainsi que le boîtier (14) forment une chambre de piston (56), système caractérisé en ce que la chambre de piston (56) est également reliée à la pompe (29) ainsi qu'à l'accumulateur (27) par l'amplificateur de force de freinage (16) et les conduites correspondantes (57, 58) lors de la mise en oeuvre de la régulation, alors que pour le freinage normal, cette chambre est reliée par une conduite (75) prévue en aval de l'électrovanne (53) commutable, au réservoir d'alimentation (13).

2. Système pour le freinage d'un véhicule selon la revendication 1, caractérisé en ce qu'en freinage normal, un volume annulaire (68) du piston (36) est relié directement à la conduite (75) reliée au réservoir d'alimentation (13) et un canal annulaire (72) du piston (15) du maître cylindre est relié par un perçage axial (55) ainsi que par la chambre de piston (56) en aval de la soupape (53) avec la conduite (75), et en fonctionnement avec régulation, la liaison se fait par une conduite d'asservissement (67) après l'électrovanne (53).

3. Système pour le freinage d'un véhicule selon la revendication 2, caractérisé en ce que le volume annulaire (68) et le canal annulaire (72) sont reliés par un joint (70, 73) perméable de manière unidirectionnelle au liquide hydraulique à partir du volume annulaire (68) ou du canal annulaire (72) avec les chambres de frein (4, 5).

4. Système pour le freinage d'un véhicule selon la revendication 2 ou 3, caractérisé en ce que le perçage axial (55) ou un système de conduite (51) dérivés du volume annulaire (68) peuvent être coupés de la chambre de frein respective (4, 5) par une soupape d'aspiration complémentaire (38).

5. Système pour le freinage d'un véhicule selon la revendication 4, caractérisé en ce que chaque soupape d'aspiration complémentaire (38) pénètre avec un prolongement (50) conique sur une tige de guidage (47) dans le perçage axial (55) ou le système de conduite (51), le prolongement (50) s'appuyant avec effet de ressort dans le perçage frontal (43) du piston (36) ou du piston (15) du maître cylindre, et une tête (45, 49) formée de l'autre côté du prolongement (50) de la tige de guidage (47), forme avec un chapeau (44) ou un prolongement (48), une butée pour ouvrir la soupape d'aspiration complémentaire (38).

6. Système pour le freinage d'un véhicule selon au moins l'une des revendications 1 à 5, caractérisé en ce que le piston (15) du maître cylindre, comporte un collet (59) formant butée pour le manchon de butée (58).

7. Système pour le freinage d'un véhicule selon la revendication 6, caractérisé par un épaulement (69) du boîtier constituant une autre butée pour le manchon de butée (58) ou le bord (61) de ce manchon.

8. Système pour le freinage d'un véhicule selon la revendication 6 ou 7, caractérisé en ce qu'entre le ressort (62) qui s'appuie contre le bord (61) et la butée annulaire (76), il est prévu un disque (60) que rencontre une bague fendue (63) lors du déplacement du manchon de butée (58).

9. Système pour le freinage d'un véhicule selon la revendication 7 ou 8, caractérisé en ce que lorsque le bord (61) vient en butée contre l'épaulement (69) du boîtier, le manchon de butée (58) ferme partiellement un perçage constituant une liaison avec le réservoir d'alimentation (13) en fonctionnement normal et une liaison avec la conduite d'asservissement (67) lors de la mise en oeuvre de la régulation.

10. Système pour le freinage d'un véhicule selon la revendication 9, caractérisé en ce qu'à la fois le volume annulaire (68) et le perçage (64) ou une ou une conduite d'alimentation (57) partent du volume (56) du piston, pour déboucher dans une chambre collectrice (52) qui est en amont de l'électrovanne (53).